# EUROPÄISCHE PATENTANMELDUNG

(11) **EP 2 157 383 A2**
(43) Veröffentlichungstag der Anmeldung: **24.02.2010**
(21) Anmeldenummer: 09401009.7
(22) Anmeldetag: 15.06.2009
(51) Int. Cl.: F24J 2/04

(54) **Montageeinrichtung zur Anpassung von Sonnenkollektorflächen**

(30) Priorität: 23.08.2008 DE 202008008819 U
(71) Anmelder: Spremberger Solar Modulbau GmbH, 03130 Spremberg (DE)
(72) Erfinder:
(74) Vertreter: Hanelt, Holger

(57) **Zusammenfassung**

Die Erfindung betrifft eine Montageeinrichtung zur Anpassung von Sonnenkollektorflächen an die Abmessungen von Dachflächen gemäß dem Oberbegriff des Hauptanspruchs. Sie ist geeignet; bei Dachflächen deren Abmessungen vom vielfachen der Abmessungen der Sonnenkollektorflöchen abweichen oder die durch Dachfenster, Mauern, Schornsteine oder schräge Dachkanten nicht vollständig mit Sonnenkollektorflächen abgedeckt werden können, einen optischen Abschluss zu gestalten.

Die Aufgabe der Erfindung, eine Montageeinrichtung zur Anpassung von Sonnenkollektorflächen an die Abmessungen von Dachflächen zur Überbrückung von Abstandsflächen zu Dachfenstern, Mauern, Schornsteinen oder Dachkanten vorzuschlagen, die eine preiswerte Gestaltung bei optimaler optischer Anpassung gestattet, wird gelöst, indem diese einem Rahmen dessen Rahmenprofil (5) oder zumindest dessen Oberseite optisch dem der Kollektoren entspricht besteht.

Dieser Rahmen ist gemäß der Erfindung mit einem Schichtkörper (10) ausgefüllt, der zumindest aus einer Tragschicht und einer sichtbar angeordneten Farbschicht (6) besteht. Die Farbschicht ist hierbei so gestaltet, dass sie den optischen Eindruck der aktiven Sonnenkollektorflächen kopiert.

## Beschreibung

Die Erfindung betrifft eine Montageeinrichtung zur Anpassung von Sonnenkollektorflächen an die Abmessungen von Dachflächen gemäß dem Oberbegriff des Hauptanspruchs. Sie ist geeignet; bei Dachflächen deren Abmessungen vom vielfachen der Abmessungen der Sonnenkollektorflächen abweichen oder die durch Dachfenster, Mauern, Schornsteine oder schräge Dachkanten nicht vollständig mit Sonnenkollektorflächen abgedeckt werden können, einen optischen Abschluss zu gestalten.

Sonnenkollektoren sind üblicherweise als rechteckige Flächen ausgebildet und lassen sich horizontal und vertikal über Steckmodule zu größeren Flächen aneinanderreihen.

In der DE 20110459 U1 geschieht das durch ein Montagesystem für gerahmte Solarmodule mit mindestens zwei sich horizontal erstreckenden, parallel zueinander angeordneten Halteprofilen zum Halten mindestens eines Solarmoduls und mit Befestigungsmitteln zur Befestigung der Halteprofile auf einem Dach oder an einer Fassade. Jedes Halteprofil weist zwei in entgegengesetzten Richtungen offene Aufnahmetaschen auf, die zur Aufnahme je einer Kante des mindestens einen Solarmoduls geeignet sind. Weiterhin soll jedes Halteprofil so gestaltet sein, dass in jeder Aufnahmetasche bedarfsweise die ortsfeste Anordnung einer Distanzbrücke zur Anpassung an die Rahmenlänge bzw. -breite des jeweiligen Solarmoduls und/oder einer Distanzbrücke zur Anpassung an die Rahmenhöhe des jeweiligen Solarmoduls ermöglicht wird.

Solche aus mehreren Modulen zusammengesetzte Flächen entsprechen in der Regel kaum den Abmaßen vorhandener Dächer. Insbesondere bei Walm- oder Krüppelwalmdächern ist es damit nicht möglich, eine Dachfläche vollständig abzudecken, um damit ein einheitliches Aussehen der Gesamtfläche zu erzielen.

Deshalb schlägt beispielsweise die DE 102005049222 A1 vor, die Dachhaut oder Dachabdeckung bei Einfamilienhäusern, Gartenlauben und Carports durch eine "komplette Dachabdeckung mit einem

Solarabsorber" zu ersetzen.

Dabei werden sämtliche Abdichtungen und Dachrinnen als ein Teil hergestellt, auf den Dachstuhl aufgesetzt und befestigt.

Bei Satteldächern wird die Firstabdeckung durch das Wörmemedium-Sammelrohr für beide Gefälle des Daches gebildet. Die Form des Dachgefälles kann plan, konkav oder konvex sein und das Dach kann ein Pultdach bilden.

Die Kosten für die Abdeckung und Montage von Solorabsorbern werden reduziert und eine große Solarabsorberfläche wird geschaffen. Zum Anschluss von Sonnenkollektoren an ein Dachfenster oder eine

Mauer wird in der DE 20106515 U1 eine Montageeinrichtung zur Verbindung von Sonnenkollektoren mit einem Anschlusselement vorgeschlagen, wobei die Sonnenkollektoren zumindest ein aus Rahmenprofilen bestehendes Gehäuse aufweisen, welches mit einer Aufnahmenut zum Einsetzen von Funktionselementen, insbesondere Dichtungen, Kantblechen oder dergleichen, versehen ist. Die Montageeinrichtung weist ein zu den Rahmenprofilen separat ausgebildetes und von diesen beabstandet am Anschlusselement anzuordnendes Montageprofil auf, das mit einer Aufnahmenut zur Aufnahme einer Dichtung und einer Abdeckung zur Überbrückung des Abstandes zwischen dem Montageprofil und der Aufnahmenut des Sonnenkollektorgehäuses versehen ist. Hierbei wird der Abstand zwischen dem Sonnenkollektorgehäuses und dem Dachfenster oder der Mauer durch ein Abdeckblech überbrückt.

Hierdurch können lediglich die Abstände zu aus dem Dach herausragenden Gebilden überbrückt werden. Ein Abschluss zu benachbarten Dachkanten ist hiermit nicht ohne Weiteres möglich. Desweitern ist eine optische Anpassung der überbrückten Flächen schwer möglich.

Durch die Hersteller von Sonnenkollektoren werden für diese Anpassung angepasste Zuschnitte von defekten Sonnenkollektoren angeboten, die analog zu den funktionstüchtigen Sonnenkollektoren gerahmt werden. Mit diesen Modulen ist eine auch optisch gute Anpassung der Sonnenkollektorflächen möglich. Da die Herstellungskosten der defekten Module nicht billiger ist, als die funktionstüchtiger, sondern zusätzlich zu diesen einen individuellen Zuschnitt verlangen, ist die Verwendung solcher Anpassungsmodule vielfach aus ökonomischer Rücksicht nicht möglich.

Aufgabe der Erfindung ist es somit, eine Montageeinrichtung zur Anpassung von Sonnenkollektorflächen an die Abmessungen von Dachflächen zur Überbrückung von Abstandsflächen zu Dachfenstern, Mauern, Schornsteinen oder Dachkanten vorzuschlagen, die eine preiswerte Gestaltung bei optimaler optischer Anpassung gestattet. Gelöst wird diese Aufgabe durch eine Montageeinrichtung mit den Merkmalen des Hauptanspruchs. Die Unteransprüche beschreiben sinnvolle Ausgestaltungen der Erfindung.

Eine erfindungsgemäße Montageeinrichtung besteht aus dem Rahmen dessen Rahmenprofil (5) oder zumindest dessen Oberseite optisch dem der Kollektoren entspricht. Dieser Rahmen hat die äußeren Abmessungen der zu überbrückenden Abstandsfläche (3).

Wenn die Erstreckung der Abstandsfläche (3) größer als die Kantenlänge der Kollektoren in dieser Richtung ist, kann dieser Rahmen auch die Größe lediglich einer Teilfläche der Abstandsfläche (3) aufweisen. Dieser Rahmen ist gemäß der Erfindung mit einem Schichtkörper (10) ausgefüllt, der zumindest aus einer Tragschicht und einer sichtbar angeordneten Farbschicht (6) besteht. Die Farbschicht ist hierbei so gestaltet, dass sie den optischen Eindruck der aktiven Sonnenkollektorflächen kopiert.

Das ist einerseits dadurch realisierbar, dass der Schichtkörper (10) aus einer auf die Farbträgerfläche (7) aufgetragenen Farbschicht (6) besteht, die von einer durchsichtigen Schutzschicht (8) überdeckt ist. Sinnvollerweise wird in diesem Falle unter der Farbträgerfläche (7) eine Stützfläche (9) angeordnet.

Andererseits kann die durchsichtige Schutzschicht (8) auch gleichzeitig die Farbträgerfläche bilden, indem die Farbschicht (6) auf der Unterseite der Schutzschicht (8) aufgetragen ist.

Ebenso ist es im Sinne der Erfindung, wenn die Stützfläche (9) gleichzeitig die Farbträgerfläche bildet, indem die Farbschicht (6) auf deren Oberseite aufgetragen ist.

Bei der Variante, die eine gesonderte Farbträgerfläche (7) aufweist, kann die Farbschicht (6) auf eine Papierbahn, Kunststoff- oder Metallfolie aufgedruckt werden.

Um die optische Anpassung weiter zu verbessern, wird durch die Erfindung weiterhin vorgeschlagen, die Papierbahn oder die Kunststoff- oder Metallfolie zusätzlich so zu prägen, dass die Ähnlichkeit zur Sonnenkollektorfläche verstärkt wird.

Natürlich ist es sinnvoll, dass die Schutzschicht (8) aus gehärtetem und/oder schmutzabweisend beschichtetem Glas besteht, wenn auch die verwendeten Sonnenkollektoren eine solche Oberfläche aufweisen. Insbesondere bei Montageeinrichtungen, die der Überbrückung kleinere Freiflächen dienen, ist es sinnvoll, wenn Kopplungseinrichtungen zur Überbrückung zwischen benachbarten aktiven Sonnenkollektoren vorhanden sind.

Bei Fotovoltaikelementen werden diese sinnvollerweise als elektrische Steckverbinder direkt am Rahmen befestigt, entsprechend dem angewendeten System können dies auch über flexible Kabel mit dem Rahmen verbunden sein.

Bei thermischen Solarkollektoren werden diese Kopplungseinrichtungen natürlich als Schläuche und Schlauchkupplungen mit dem Rahmen verbunden ausgebildet sein.

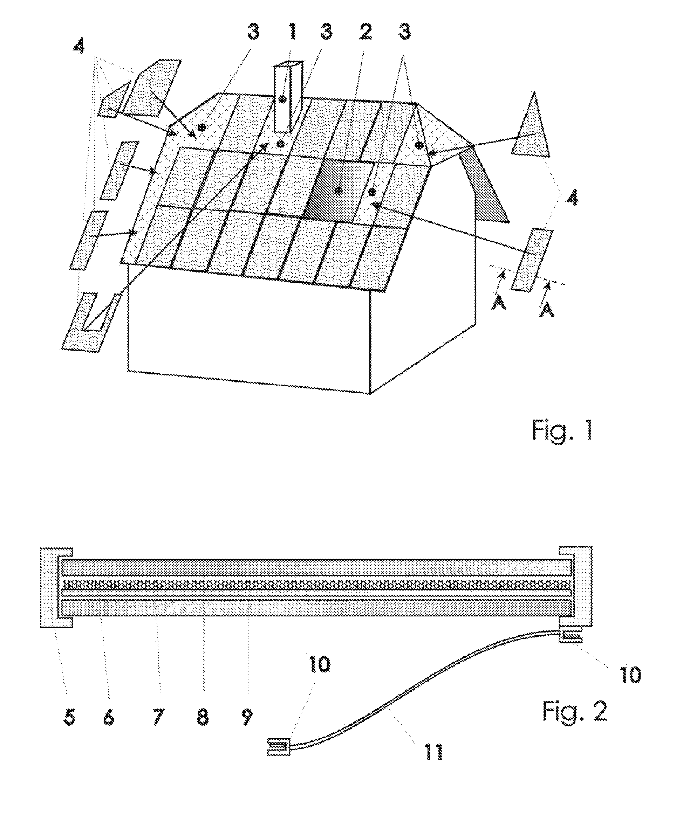

Im Folgenden soll die Erfindung anhand der Zeichnungen Figur 1 und 2 in Form eines Ausführungsbeispiels erläutert werden. Dabei zeigt
- Fig. 1: ein Krüppelwalmdach mit unterschiedlich geformten Montageeinrichtungen
- Fig. 2: den Querschnitt einer erfindungsgemäßen Montageeinrichtung.

Eine erfindungsgemäße Montageeinrichtung besteht aus dem Rahmen, dessen Rahmenprofil 5 dem der Sonnenkollektoren angepasst ist. Dieser Rahmen hat die äußeren Abmessungen der zu überbrückenden Abstandsfläche 3 und ist mit einem Schichtkörper 10 ausgefüllt, der aus einer Tragschicht 7 und einer darauf angeordneten Farbschicht 6 besteht.

Die Farbschicht 6 ist von einer durchsichtigen Schutzschicht 8 überdeckt und unter der Farbträgerfläche 7 ist weiterhin eine Stützfläche 9 angeordnet.

Als Farbträgerfläche 7 dient eine geprägte Metallfolie auf der ein Foto der Sonnenkollektorfläche aufgedruckt ist.

Wie die Sonnenkollektoroberfläche besteht die Schutzschicht 8 aus gehärtetem und/oder schmutzabweisend beschichtetem Glas. Zur Überbrückung zwischen benachbarten aktiven Sonnenkollektoren sind als elektrische Steckverbinder 10 sowohl direkt am Rahmen befestigt als auch über flexible Kabel 11 mit dem Rahmen verbunden.

## Patentansprüche

1. Montageeinrichtung zur Anpassung von Sonnenkollektorflüchen an die Abmessungen von Dachflächen zur Überbrückung von Abstandsflächen zu Dachfenstern (2) Mauern, Schornsteinen (1) oder Dachkanten, insbesondere bei schrägen Dachkanten von Walmdächern oder Krüppelwalmdächern, wobei die einzelnen Sonnenkollektoren der Sonnenkollektorflöchen zumindest ein vorzugsweise aus Rahmenprofilen bestehendes Gehäuse aufweisen, **dadurch gekennzeichnet, dass** ein aus dem Rahmenprofil (5) oder einem zumindest auf der Oberseite optisch gleichem Profil bestehender Rahmen die äußeren Abmessungen der oder einer Teilfläche der Abstandsfläche (3) hat und dass dieser Rahmen mit einem Schichtkörper (10) ausgefüllt ist, der zumindest aus einer Tragschicht und einer sichtbar angeordneten Farbschicht (6) besteht, wobei die Farbschicht so gestaltet ist, dass sie den optischen Eindruck der aktiven Sonnenkollektorflüchen kopiert.

2. Montageeinrichtung nach Anspruch 1, **dadurch gekennzeichnet, dass** der Schichtkörper (10) aus der Farbschicht (6) besteht, die auf einer Farbträgerfläche (7) aufgetragen ist, dass die Farbschicht (6) von einer durchsichtigen Schutzschicht (8) überdeckt ist und dass unter der Farbträgerfläche (7) eine Stützfläche (9) angeordnet ist.

3. Montageeinrichtung nach Anspruch 1 oder 2, **dadurch gekennzeichnet, dass** die durchsichtige Schutzschicht (8) gleichzeitig die Forbtrügerflüche bildet, indem die Farbschicht (6) auf der Unterseite der Schutzschicht (8) aufgetragen ist.

4. Montageeinrichtung nach Anspruch 1 oder 2, **dadurch gekennzeichnet, dass** die Stützfläche (9) gleichzeitig die Farbträgerfläche bildet, indem die Farbschicht (6) auf der Oberseite der Stützfläche (9) aufgetragen ist.

5. Montageeinrichtung nach einem oder mehreren der Ansprüche 1 bis 4, **dadurch gekennzeichnet, dass** die Farbschicht (6) auf eine Papierbahn, Kunststoff- oder Metallfolie aufgedruckt ist.

6. Montageeinrichtung nach Anspruch 5, **dadurch gekennzeichnet, dass** die Farbschicht (6), die Papierbahn oder die Kunststoff- oder Metallfolie zusätzlich so geprägt sind, dass die Ähnlichkeit zur Sonnenkollektorfläche verstärkt wird.

7. Montageeinrichtung nach Anspruch 5, **dadurch gekennzeichnet, dass** die Schutzschicht (8) aus gehärtetem und/oder schmutzabweisend beschichtetem Glas besteht.

8. Montageeinrichtung nach einem oder mehreren der voranstehenden Ansprüche, **dadurch gekennzeichnet, dass** Kopplungseinrichtungen zu Überbrückung zwischen benachbarten aktiven Sonnenkollektoren vorhanden sind.

9. Montageeinrichtung nach Anspruch 8, **dadurch gekennzeichnet, dass** als Kopplungseinrichtungen elektrische Steckverbinder direkt am Rahmen befestigt und/oder über flexible Kabel mit dem Rahmen verbunden sind.

10. Montageeinrichtung nach Anspruch 8, **dadurch gekennzeichnet, dass** als Kopplungseinrichtungen Schläuche und Schlauchkupplungen mit dem Rahmen verbunden sind.
